# EUROPEAN PATENT APPLICATION

(11) **EP 4 047 104 A1**
(43) Date of publication of application: **24.08.2022**
(21) Application number: 20877666.6
(22) Date of filing: 29.09.2020
(51) Int. Cl.: C21D 1/42, H05B 6/04, H05B 6/10, H05B 6/44

(54) **SYSTEM FOR INDUCTION HEATING METAL PIECES**

(30) Priority: 17.10.2019 ES 201930920
(71) Applicant: GH Electrotermia, S.A., 46184 San Antonio de Benagéber (Valencia) (ES)
(72) Inventor: MORATALLA MARTÍNEZ, Pedro, 46184 San Antonio De Benagéber (Valencia) (ES); CASES SANCHÍS, César Manuel, 46184 San Antonio De Benagéber (Valencia) (ES); RODRÍGUEZ LARA, Juan Carlos, 46184 San Antonio De Benagéber (Valencia) (ES); NÚÑEZ RÓDENAS, Bernabé, 46184 San Antonio De Benagéber (Valencia) (ES); LÓPEZ MARTÍN, Fernando, 46184 San Antonio De Benagéber (Valencia) (ES); MAGRANER CÁCERES, José Miguel, 46184 San Antonio De Benagéber (Valencia) (ES); HERRERO GARCÍA, Raúl, 46184 San Antonio De Benagéber (Valencia) (ES)
(74) Representative: Ungria López, Javier
(86) International application number: PCT/ES2020/070585
(87) International publication number: WO 2021/074464

(57) **Abstract**

The present invention relates to a dual frequency system for induction heating metal pieces using an induction coil designed for the passage therethrough of a current resulting from the combination of two currents of different frequencies. The system comprises: two inverter circuits that generate a low-frequency signal and a high-frequency signal; and a current transformer and a capacitor element that are connected to each of the inverters, wherein the capacitor element of the high-frequency branch is connected at an intermediate point of the induction coil, defining a section in the coil that prevents the passage of high-frequency current to the first inverter circuit and, in turn, is used to heat the piece.

## Description

### OBJECT OF THE INVENTION

The present invention relates to the technical field of heat treatment of metal pieces and more specifically to multi-frequency systems for induction heating pieces such as metal tubes or profiles.

### BACKGROUND OF THE INVENTION

Currently, induction heating of large metal pieces, such as profiles or pipes used later in oil installations, is an essential part of their heat treatment, wherein precision is fundamental to achieve effective results and prevent unexpected cooling problems or unequal distribution of treatment.

In longitudinal pieces of this type, the ends are especially critical, wherein in conventional processes they have a greater risk of losing temperature than the central areas of the piece and precisely at the ends is where the connection systems (normally threaded) with the other contiguous tubes that will form the complete conduit are located. These oil pipes are usually buried hundreds of metres deep, so that the breakage of one end as a result of poor mechanical strength renders the entire installation useless and forces a new parallel probe to be carried out for the repair thereof, with the consequent loss of resources, delays and other drawbacks.

The systems for induction heating metal pieces use multi-frequency processes to achieve greater control of the depth and degree of tempering of the pieces, which results in a great capacity to provide uniform treatments regardless of the type of geometry of the pieces.

In the state of the art, there are several multi-frequency induction heating systems that apply two different frequencies in a sequential process. However, for this it is necessary to duplicate the entire equipment for each of the frequencies, which is inefficient.

Other state-of-the-art solutions choose to simultaneously generate, in a single process, the currents of both frequencies that feed a single inductor, which represents a significant reduction in the total time of the tempering cycle of a piece, but nevertheless has the problem of ensuring that the different frequencies do not interfere with the power supply.

An example of equipment of this type is patent document EP1363474, wherein the output current is obtained by means of two complete and separate converters, one of them operating at high-frequency and the other at medium frequency connected to a single heating inductor via resonant circuits, wherein the disturbances of a first inverter are prevented by means of the second frequency as a result of an L-LC resonant circuit provided with a damping branch and a near-short circuit branch. However, among other problems, these solutions have major drawbacks related to the high complexity and cost of the equipment, as well as excessive production times.

Therefore, an induction solution, which works with two frequencies, without these interfering with each other, and which has additional advantages with respect to already known systems is lacking in the state of the art, wherein reducing the degree of complexity would be especially well received by the industry, as well as avoiding filter losses, increasing efficiency.

### DESCRIPTION OF THE INVENTION

In order to achieve the objectives and prevent the drawbacks mentioned above, the present invention describes, in a first aspect, a dual frequency system for induction heating metal pieces using an induction coil, wherein the induction coil is configured for the passage therethrough of a current resulting from the combination of two currents of different frequencies and generates an electromagnetic field that enables the metal pieces introduced inside said induction coil be heated, wherein the system comprises:
- a first inverter circuit and a second inverter circuit generating a low-frequency signal and a high-frequency signal, respectively;
- a first current transformer and a second current transformer, connected to the output of the first and second inverter circuits, respectively; and
- a first capacitor element and a second capacitor element, connected between the output of the first and second current transformers, respectively, and the induction coil;
wherein the second capacitor element is connected at an intermediate point of the induction coil, which defines a section that prevents the passage of high-frequency currents to the first inverter circuit. Thus, the induction coil advantageously acts as a low-pass filter, preventing disturbances due to high-frequency currents from affecting the low-frequency source and generating an inductive field on the piece.

In one embodiment of the invention, the two inverter circuits, which generate the signals of different frequencies, are derived from one same power supply. Alternatively, one embodiment of the invention contemplates a power supply for each of the inverter circuits.

The capacitor elements, according to one of the embodiments of the invention, are capacitor banks that, altogether, have a different capacity for the first capacitor element with respect to the second capacitor element.

In one of the embodiments it is envisaged that the heating induction coil, which receives all the power generated by the sources, is a multi-turn type coil.

The induction coil is designed to define an interior space large enough to receive large longitudinal metal pieces. Advantageously, the induction coil fulfils a double function, wherein, on the one hand, it is a low-pass filter that prevents high-frequency currents from disturbing the low-frequency source and, on the other hand, it enables heating the metal pieces introduced therein.

In one of the embodiments of the invention, guiding means are envisaged to introduce the metal pieces inside the induction coil, wherein the distance between the outer surface of the metal pieces introduced by the guiding means and the inner surface of the induction coil is known. Advantageously, the guiding means can form part of an automated production line, where ensuring a constant distance between the surfaces of the pieces to be treated and the inner surface of the induction coil facilitates uniformity in the depth of penetration of the treatment.

The advantages derived from the features of the new morphology described above for the system of the present invention are more evident for heating pieces with a longitudinal configuration, such as tubes and profiles, but are equally applicable to any piece where problems of homogeneity in heating occur.

Advantages of the present invention include, for example, increased efficiency, controllability of heating processes, repetitiveness of the same, uniformity of the applied treatment or isolation against frequency disturbances, also obtaining a current that combines simultaneously or alternately the two high and medium frequencies required to feed a single heating inductor.

In addition, the invention provides additional advantages such as a reduction in complexity, a reduction in the cost and volume of the installation, and a reduction in production times.

For the purpose of helping to make this specification more readily understandable, figures constituting an integral part of the same have been included below, wherein by way of illustration and not limitation they represent the object of the invention.

### BRIEF DESCRIPTION OF THE FIGURES

To complete the description of the invention, and for the purpose of helping to make the features thereof more readily understandable, according to a preferred exemplary embodiment thereof, a set of drawings is included where, by way of illustration and not limitation, the following figures have been represented:
- **Figure 1** represents a diagram of one of the embodiments of the present invention.
- **Figure 2** represents a detailed view of the advantageous configuration of the induction coil in one embodiment of the present invention, with a piece being treated inside the same.

### DETAILED DESCRIPTION OF THE INVENTION

The present invention discloses a system for induction heating, which uses two simultaneous or alternating frequencies applied to one same inductor, wherein the low-pass filter is also used as a heating inductor, advantageously reusing all the energy consumed by the same and increasing the efficiency of the entire system.

With reference to the figures and the reference numbers adopted therein, an exemplary embodiment of the invention is described in greater detail below.

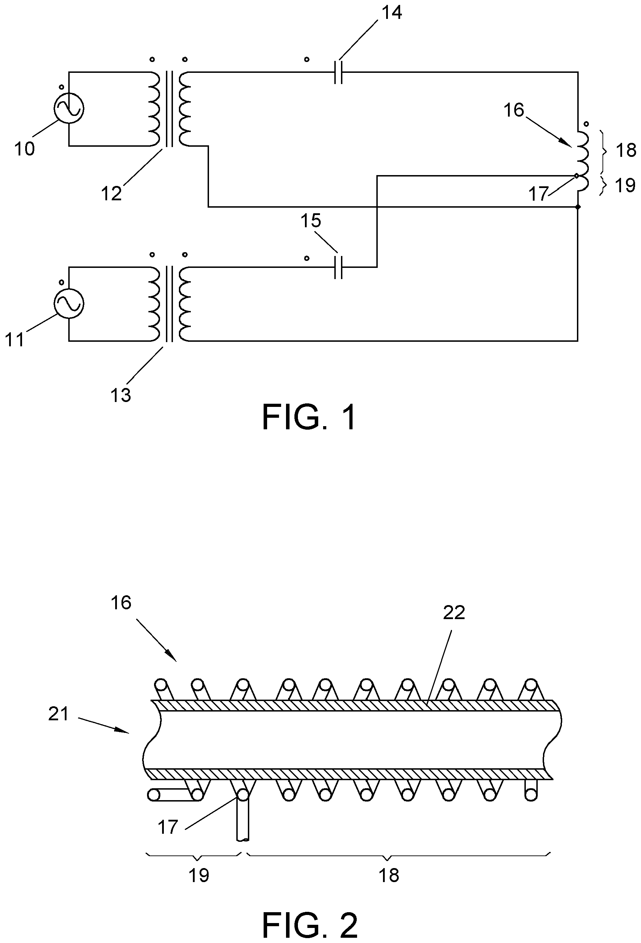

**Figure 1** shows an embodiment wherein the system is made up of two inverters to provide two different frequencies, so that there is a first inverter 10 that provides a low-frequency voltage and a second inverter 11 which provides a high-frequency voltage. The inverters of the induction heating system of the present invention are connected to a single direct current power supply (although in other embodiments a power supply can be arranged for each of them), so that each of the inverters transforms the direct current input voltage into a symmetrical alternating current output voltage, with the selected frequency.

The two low-frequency **10** and high-frequency **11** inverters are connected at the output thereof to two current transformers **12** and **13,** respectively, which provide the system with galvanic isolation and impedance matching.

The two current transformers **12** and **13** are connected to a bank of capacitors **14** and **15,** respectively, and to a single heating coil **16.**

The heating coil **16** receives all the power generated by the power supply connected to the inverters, wherein the two generated frequencies are combined alternately or simultaneously and the configuration of the system of the present invention selectively causes the high-frequency not to be applied to the entire coil, but instead only be applied to a first portion **19.** Therefore, the coil is functionally divided into two portions, a first portion **19,** wherein both low-frequency and high-frequency are applied, and a second portion **18** wherein only low-frequency is applied. The first portion **19** and the second portion **18** of the coil 16 are separated by the junction point **17** between the coil **16** and the capacitor **15.** Advantageously, this configuration enables the system of the present invention to selectively define an area of the piece to be treated, without affecting the entire piece.

The heating coil **16** in the system shown in Figure 1 has a dual functionality: on the one hand it delivers the power generated by the power supplies to the load that is inside said coil and, on the other hand, the portion **18** of the coil wherein only low frequency is applied to the load acts as a low-pass filter, preventing high-frequency currents from flowing towards the low-frequency source, which is fundamental for the system to remain immune to disturbances between the different frequencies.

**Figure 2** shows in greater detail the coil **16,** which is dimensioned to define an interior space **21** large enough to enable the introduction of the metal pieces to be treated, which in the case of Figure 2 is a tube **22** in longitudinal cross section view. At the same time that the induction heating treatment of the tube arranged inside the coil is carried out, the system of the present invention functionally behaves as a low-pass filter that prevents disturbances caused by high frequencies in the low-frequency source.

The specific configuration of the system that results in the low-pass filter behaviour can be seen in detail in Figure 2, wherein the ends of the coil are connected between the capacitor **14** and the transformer **13.** Additionally, the capacitor **15** is connected at one intermediate point **17** of the coil, defining the section **18,** from said connection point **17** to the end connected to the capacitor **14,** which prevents high-frequency currents from flowing to the low-frequency source and is therefore functionally a low-pass filter.

The induction heating system of the present invention, described in detail in the embodiments corresponding to the previous figures, has a very wide range of applications. Induction heating is a technique that encompasses many technical fields, so that the control possibilities offered by the combination of frequencies on one same inductor, which at the same time acts as a low-pass filter, reusing the entire magnetic field generated in energy delivered to the pieces to be treated, advantageously increases the efficiency of the system. In addition, it reduces the complexity and material of traditional systems, which need to include independent filter coils to prevent disturbances between different frequencies.

Depending on the needs of each specific piece, the induction system of the present invention can apply both frequencies alternately or simultaneously throughout the coil or, in an alternative embodiment, apply them sequentially. The geometry of the piece, the material or the final features expected from the piece determine the specific configuration of the inductor to offer results of the highest quality and hardness.

In the case, for example, of conductive pipes used in oil installations, the most critical pieces turn out to be the ends of the pipes, since they support the connections between adjoining pipes and can be exposed to greater wear and fatigue. The heating process for these cases must be fully guaranteed for the entire piece and must prevent the ends from losing temperature with respect to the central portion of the piece, caused by an unexpected cooling that would cause the mechanical properties of the ends to not be as desired. Thus, the induction system of the present invention selectively applies high and low frequencies in the induction coil to achieve total control over the heating of the piece, so that it can combine different depths of treatment penetration depending on the temperature, always taking into account that the depth of penetration is inversely proportional to the applied frequency. Nevertheless, the present invention is equally applicable to any piece where unexpected cooling problems occur in any of the treated areas thereof.

The multi-frequency induction heating system, with protection against disturbances between different frequencies, can be built-in into a process chain as one more automated element or can also be used independently by inserting the pieces manually.

The present invention should not be limited by the embodiment herein described. Other arrangements may be carried out by those skilled in the art based on the present description. Accordingly, the scope of the invention is defined by the following claims.

## Claims

1. A dual frequency system for induction heating metal pieces using an induction coil (16), wherein the induction coil is configured for the passage therethrough of a current resulting from the combination of two currents of different frequencies and generating an electromagnetic field that enables the metal pieces introduced inside said induction coil to be heated, **characterised in that** it comprises:
- a first inverter circuit (10) and a second inverter circuit (11) generating a low-frequency signal and a high-frequency signal, respectively;
- a first current transformer (12) and a second current transformer (13), connected to the output of the first and second inverter circuits, respectively; and
- a first capacitor element (14) and a second capacitor element (15), connected between the output of the first and second current transformers, respectively, and the induction coil;
wherein the second capacitor element (15) is connected at one intermediate point (17) of the induction coil, wherein said intermediate point defines a section (18) in the induction coil (16) that blocks the passage of high-frequency currents towards the first inverter circuit.

2. The system according to claim 1, further comprising a single power supply connected to both the first inverter circuit and the second inverter circuit.

3. The system according to claim 1, further comprising a dedicated power supply for each of the inverter circuits.

4. The system according to any of the preceding claims, wherein the first capacitor element and the second capacitor element are capacitor banks with a different total capacity.

5. The system according to any of the preceding claims, wherein the induction coil is a multi-turn coil.

6. The system according to any of the preceding claims, wherein the induction coil comprises an interior space (21) suitable for receiving longitudinal metal pieces.
